Europäisches Patentamt

European Patent Office

Office européen des brevets

(19)

(11) **EP 0 654 686 B1**

(12) **EUROPEAN PATENT SPECIFICATION**

(45) Date of publication and mention
of the grant of the patent:
**24.07.2002 Bulletin 2002/30**

(51) Int Cl.[7]: **G01V 3/26**, G01R 33/02

(21) Application number: **94308590.2**

(22) Date of filing: **21.11.1994**

(54) **Method of correcting for axial error components in magnetometer readings during wellbore survey operations**

Verfahren zur Korrektur von axialen Fehlerkomponenten in Magnetometermessungen während Bohrlochmessoperationen

Procédé pour corriger des composantes d'erreur axial des mesures magnétiques pendant les opérations de mesure dans un puits

(84) Designated Contracting States:
**FR GB NL**

(30) Priority: **19.11.1993 US 155027**

(43) Date of publication of application:
**24.05.1995 Bulletin 1995/21**

(73) Proprietor: **BAKER HUGHES INCORPORATED**
**Houston Texas 77027-5177 (US)**

(72) Inventor: **DiPersio, Richard D.**
**Houston, Texas 77064 (US)**

(74) Representative: **Cline, Roger Ledlie**
**EDWARD EVANS BARKER**
**Clifford's Inn,**
**Fetter Lane**
**London EC4A 1BZ (GB)**

(56) References cited:
**EP-A- 0 384 537**          **EP-A- 0 387 991**
**US-A- 4 709 486**          **US-A- 5 155 916**

## Description

The present invention relates in general to survey operations in an oil and gas wellbore, and in particular relates to techniques for obtaining more accurate magnetometer data.

In order to understand the present invention, it is important to establish the definitions of terminology utilized in wellbore survey operations. Surveys are used to determine the position of a wellbore within the earth. The orientation of the wellbore is determined at a particular depth by the deviation of the wellbore from a predetermined axis. The deviations may be measured with respect to two reference vectors:

(1) the earth's gravitational field vector "G"; and
(2) the earth's magnetic field vector "H".

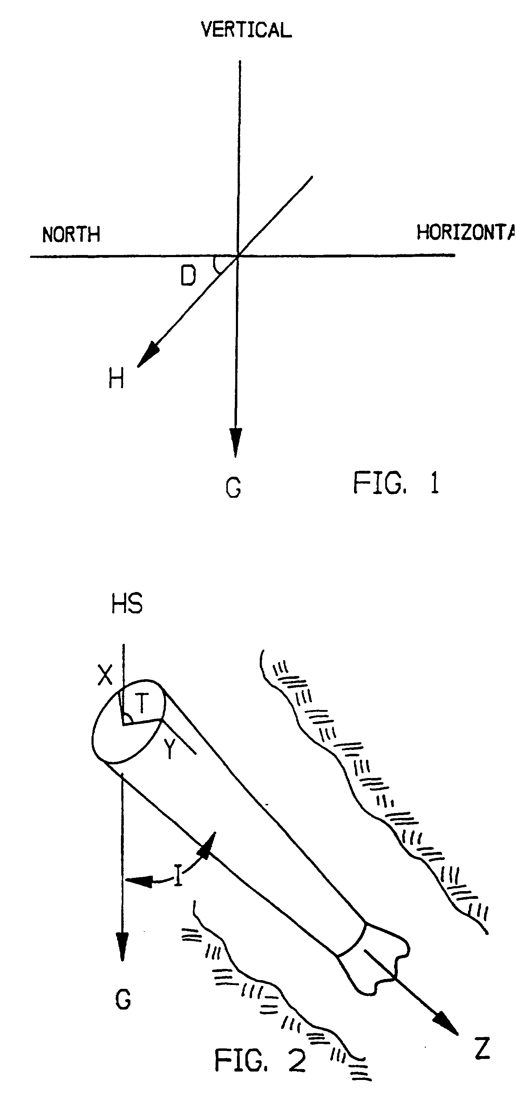

In accordance with this convention, G is positive in the vertical downward direction, while H is positive in the north direction and is inclined by a dip angle D below the horizon, as is shown in **Figure 1**.

In the frame of reference established by the earth's gravitational field vector G, the deviation is identified as an inclination "I" angle, which is the angle between the longitudinal axis of the drillstring and the earth's gravitational field vector G. In the frame of reference established by the earth's magnetic field vector H, the deviation is identified as a magnetic azimuth "A", which is the angle between the horizontal component of the longitudinal axis of the drillstring and the horizontal component of the earth's magnetic field vector H.

Wellbore survey operations also frequently utilize the dip angle "D", which is the complement of the angle between the earth's magnetic field vector H and the earth's gravitational field vector G (that is, 90 degrees less the angle between vectors H and G). The dip angle D is available in look-up tables for all latitudes and longitudes on the earth's surface.

In conventional wellbore survey operations, accelerometers are utilized to measure the direction of the earth's gravitational field vector G, and magnetometers are utilized to measure the earth's magnetic field vector H. Each vector, includes x-axis, y-axis, and z-axis components.

In the prior art, EP-A-0 384 537 describes a method for determining the azimuth and inclination of a borehole relating to normalisation of sensor outputs, whilst US-A-4 709 486 teaches a method of determining the orientation of a surveying instrument in a borehole which requires that each $H_z$ be calculated from a non-colinear orientation with the $H_z$ to which it is compared. Neither of these references discloses or suggests calculating directly, algebraically and non-iteratively the azimuth using $H_{ZE}$ which is free of axial magnetic field errors.

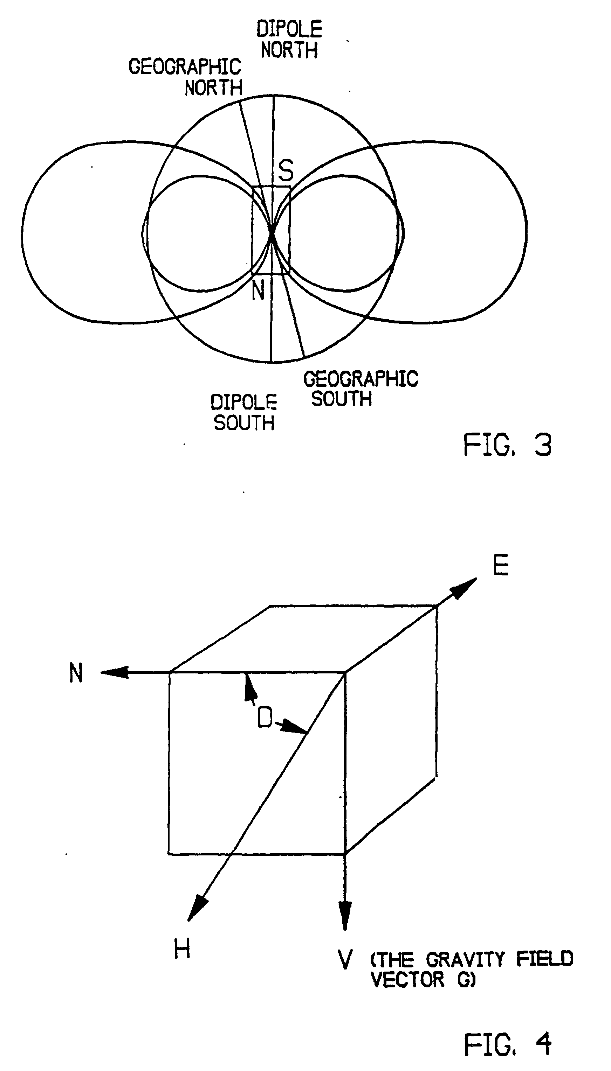

In order to understand the techniques of the present invention for compensating for the magnetic field biasing error "e", it is important first to understand the coordinate systems utilized in surveying operations. **Figure 2** provides a view of the Cartesian coordinate system which is established relative to the bottomhole assembly of a drillstring. The z-axis of the coordinate system is in alignment with the longitudinal axis of the bottom hole assembly. The x-axis and y-axis are perpendicular to the z-axis, and are fixed in position with respect to the bottom hole assembly. Therefore, rotation of the bottom hole assembly relative to the z-axis also rotates the x-axis and the y-axis by an amount measured in terms of tool face angle "T". Note that the inclination angle I provides a measure of the position of the bottomhole assembly of a drillstring relative to the gravity field vector G.

An alternative coordinate system is frequently utilized when the earth's magnetic field is discussed. The earth's field can be approximated by a magnetic dipole, such as that shown in **Figure 3**. Note that the earth's North magnetic pole is the pole towards which the north end of a compass needle is attracted: it is the south pole of the dipole. When the earth's magnetic field is discussed, it is common to employ a N-E-V (North-East-Vertical) coordinate system. By convention, the earth's magnetic field H points toward the north magnetic pole, inclined by a dip angle D below the horizon in the northern hemisphere. **Figure 4** provides a view of this coordinate system. In this coordinate system, the V-axis is aligned with the gravity field vector G, and the x-y plane is parallel with the "horizon".

During survey operations, magnetometer readings are taken along the three axes to determine the magnetic field vector H components: these measurements are identified as $H_x$, $H_y$, and $H_z$. Accelerometer readings are taken along the three axes to determine the gravitational field vector G components: these measurements are identified as $G_x$, $G_y$, and $G_z$. Since these vectors have both a direction and a magnitude, these tri-axial measurements will have to be scaled, or calibrated, to accurately reflect the magnitude of the vector they represent

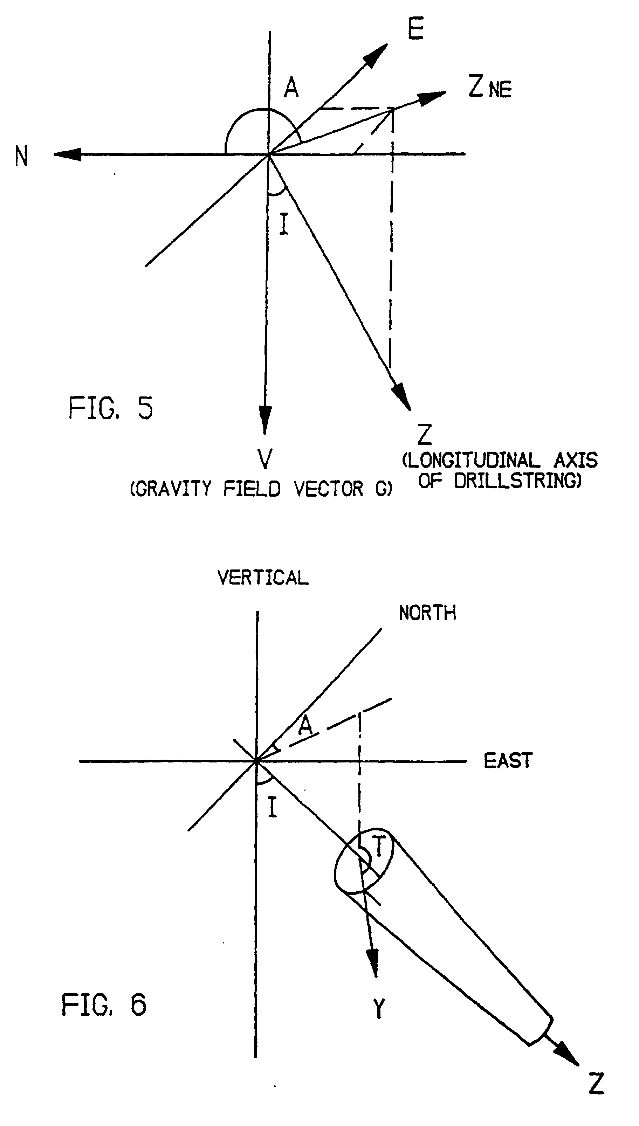

Survey tools utilizes these x-y-z arrays of accelerometers and magnetometers to determine the directions and magnitudes of the H and G vectors in the x-y-z frame of reference. This information is used to determine the tool's "attitude", expressed by the inclination angle I, and the azimuth angle A, as is shown in **Figure 5** and **Figure 6.**

Once a set of values for $H_x$, $H_y$, $H_z$, $G_x$, $G_y$, and $G_z$ are determined for a specific wellbore depth, the azimuth A and inclination I of the wellbore at that depth can be determined. Also, the value of the magnetic dip angle D can be calculated. The magnetic dip angle D is the angle between the earth's magnetic field vector and the gravitational field vector G. An expected magnetic dip angle D can be looked up in reference tables based on the wellsite's longitude and latitude. The sensors are also utilized to determine the tool face angle T. The three accelerometers are normally used to find I and G, the magnetometers are used to find H, and a combination of measurements from all sensors are required to calculate A and D.

Once the azimuth A and inclination I are determined for the wellbore at a number of specific depths, a directional map of the wellbore can be plotted. This directional map shows how far, and in what direction, the wellbore is deviated from the vertical and magnetic north, and ultimately where the well is bottomed.

In order to provide the greatest accuracy in magnetic field measurements, the wellbore surveying tool is typically housed in a non-magnetic subassembly. Additionally, surrounding subassemblies may also be constructed of a non-magnetic material. However, the drillstring, including these non-magnetic subassemblies, can nonetheless become magnetized during drilling operations, to such an extent that the accuracy of the magnetic field measurements is severely impaired. Any magnetization of the bottomhole assembly in the vicinity of the surveying equipment will introduce a biasing error "$\theta$", which is an undesired error component contained in magnetometer readings due to the magnetization of the drillstring. The biasing error includes the following two types of error components:

(1) an axial biasing error $\theta_z$; and
(2) a transverse (or "cross-axial") biasing error $\theta_{xy}$.

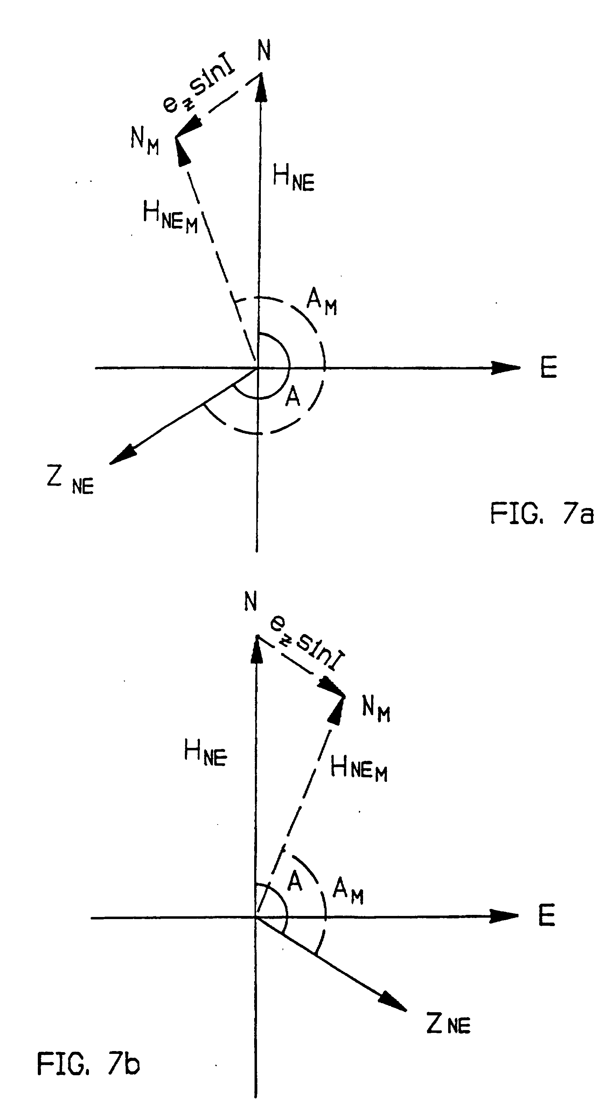

**Figures 7a** and **7b** graphically depict the effects of an axial magnetic field bias "$\theta_z$" on the determination of azimuth A. As is shown in **Figures 7a** and **7b,** the effect of the axial error field $\theta_z$ is to typically increase apparent azimuth $A_m$ if the hole has a westward component as is shown in **Figure 7a,** or to typically decrease apparent azimuth $A_m$ if the hole is eastbound, as is shown in **Figure 7b.** In either case, the apparent bottomhole location is moved further north. This is the typical case for boreholes located in the northern hemisphere. When undesired spurious magnetization is present, magnetization and accelerometer readings provide values for the measured horizontal component of the magnetic field $H_{NEM}$ and measured Azimuth $A_m$, but we wish to find the unbiased horizontal component of the magnetic field $H_{NE}$ and especially an unbiased azimuth A.

It is one objective of the present invention to provide a method of surveying a wellbore utilizing a sensor array located within a drillstring, wherein wellbore azimuth is calculated utilizing an estimate of the axial component of the magnetic field, which is free of many types of magnetic field error, to provide a measure of the wellbore azimuth which is substantially error-free of sensor and axial magnetic field biasing error components.

It is another objective of the present invention to provide a method of surveying in a wellbore, at a particular geographic location, utilizing a sensor array located within a drillstring within the wellbore, which utilizes measurements taken with the sensor array in combination with nominal values for the magnetic field strength and/or magnetic dip angle to calculate a plurality of estimates of the axial component of the magnetic field, which are then blended or combined to provide a "best" estimate of the axial component of the magnetic field at the particular geographic location, and then utilizing the best estimate of the axial component of the magnetic field to calculate wellbore azimuth, in a manner which renders the wellbore azimuth calculation free of the effects of many magnetic field errors.

It is still another objective of the present invention to provide a method of surveying a wellbore, at a particular geographic location, utilizing a sensor array located within a drillstring within the wellbore, which calculates a plurality of estimates of the axial component of the magnetic field, and then generates a composite estimate of the axial component of the magnetic field in a manner which emphasizes the estimates of the axial component of the magnetic field in proportion to a numerical indication of the degree of confidence of accuracy of the values for the particular estimates, thus assuring that a "best" estimate of the axial component of the magnetic field is utilized in calculating the wellbore azimuth, thus ensuring that the measure of wellbore azimuth is substantially free of the effects of many magnetic field error components.

These and other objectives are achieved as is now described. The present invention is directed to a method of surveying a wellbore, at a particular geographic location, utilizing a sensor array which is located within a drillstring within the wellbore. The sensor array is utilized to measure the magnetic and gravitational fields at a particular depth. Preferably, these measurements are used in combination with the nominal (or estimated) values for magnetic field strength and magnetic dip angle, to derive a plurality of estimated values of the axial component of the magnetic field which satisfy particular predefined criteria. In the preferred embodiment of the present invention, one axial component of the magnetic field $H_{Z1}$ is calculated which matches the calculated magnetic field strength H to nominal magnetic field strength $\underline{H}$, at a particular geographic location. In this preferred embodiment, another estimated value of the axial component of the magnetic field $H_{Z2}$ is calculated to match the calculated dip angle D to nominal dip angle $\underline{D}$ at the particular geographic location.

In the preferred embodiment of the present invention, the plurality of estimates of the axial component of the magnetic field are combined, or blended, in a manner to derive a "best estimate" for the axial component of the magnetic field at that particular location. More particularly, in the present invention, numerical confidence indicators are calculated for each estimate to provide a numerical indication of the degree of confidence of the accuracy of the estimate. In the preferred embodiment of the present invention, one confidence indicator is generated for each estimate. Then, preferably, the confidence indicators are utilized to generate a weighted average which represents the "best estimate" for the axial component of the magnetic field.

Additional objectives, features and advantages will be apparent in the written description which follows.

The novel features believed characteristic of the invention are set forth in the appended claims. The invention itself, however, as well as a preferred mode of use, further objectives and advantages thereof, will best be understood by reference to the following detailed description of an illustrative embodiment when read in conjunction with the accompanying drawings, wherein:

**Figure 1** is a simplified graphical depiction of the earth's field vectors;

**Figure 2** provides a view of the Cartesian coordinate system which is established with reference to the longitudinal axis of a drillstring disposed within a wellbore;

**Figure 3** provides a simplified view of the earth's magnetic field;

**Figure 4** provides a view of the north-east-vertical coordinate system which is frequently utilized when discussing the earth's magnetic field;

**Figures 5** and **6** provide graphical views of the azimuth and inclination angles relative to coordinate systems;

Figures 7a and 7b provide a graphical depiction of the impact of an axial magnetic biasing error component ($e_z$) upon the measurement and calculation of wellbore azimuth;

Figure 8 is a graph which is utilized to describe the technique of the present invention for quantifying the degree of confidence in the value derived for $H_{z1}$, a first estimate of the axial component of the magnetic field;

Figure 9 is a graph which is utilized to describe the technique of the present invention for quantifying the degree of confidence in the value derived for $H_{z2}$, a second estimate of the axial component of the magnetic field;

Figures 10a, b, and c depict different types of sensor error,

Figure 11 depicts one example of surveying operations conducted during drilling operations in accordance with the present invention;

Figure 12 is a pictorial representation of a data processing system which may be programmed in accordance with the present invention, and

Figure 13 is a high level flowchart of the operations performed by the data processing system.

Borehole orientation is the direction of a vector tangent to the borehole trajectory. It is associated with three angular parameters. Azimuth A is the angle between north N and the projection of the borehole orientation vector onto the horizontal plane. Inclination I is the angle between vertical V and the borehole orientation vector. Highside toolface HS is the angle between the high side of the borehole and a scribe line reference on the side of the sensor package.

Borehole angle parameters are typically determined using a sensor package that provides accelerometer and magnetometer measurements along the axes of a coordinate system defined as follows. The z-axis is oriented forward along the borehole axis. The x-axis and y-axis are defined to be the two cross-axial axes perpendicular to the borehole z-axis. The y-axis points in the direction from the center of the borehole toward the tool scribe line.

The sensor package accelerometer and magnetometer readings are measurements of the components of the earth's geomagnetic field in the XYZ-coordinate system. The earth's gravitational field has magnitude G in the vertical direction. The earth's magnetic field has magnitude H, and is oriented north, at the dip angle D. These parameters are location-dependent.

The accelerometer measurements associated with the three axes are $G_X$, $G_Y$, and $G_Z$. In terms of the earth's field parameters and the drilling angles, they can be expressed as:

$$(1) \qquad G_X = - G \cdot sinI \cdot sinHS$$

$$(2) \qquad G_Y = - G \cdot sinI \cdot cosHS$$

$$(3) \qquad G_Z = G \cdot cosI$$

The magnetometer measurements associated with the three axes are $H_X$, $H_Y$, and $H_Z$. In terms of the earth's field parameters and the drilling angels, they can be expressed as:

$$(4) \qquad H_X = H \cdot cosD \cdot sinHS \cdot cosI \cdot cosA - H \cdot sinD \cdot sinHS \cdot sinI +$$

$$H \cdot cosD \cdot cosHS \cdot sinA$$

$$(5) \qquad H_Y = H \cdot cosD \cdot cosHS \cdot cosI \cdot cosA - H \cdot sinD \cdot cosHS \cdot sinI -$$

$$H \cdot cosD \cdot sinHS \cdot sinA$$

$$(6) \qquad H_Z = H \cdot cosD \cdot sinI \cdot cosA + H \cdot sinD \cdot cosI$$

The total earth's field parameters can be calculated from the accelerometer and magnetometer measurements using the following equations:

$$(7) \qquad G = (G_X{}^2 + G_Y{}^2 + G_Z{}^2)^{0.5}$$

$$(8) \qquad H = (H_X{}^2 + H_Y{}^2 + H_Z{}^2)^{0.5}$$

$$(9) \qquad tanD = (G_X \cdot H_X + G_Y \cdot H_Y + G_Z \cdot H_Z) \div$$

$$[(G_Y \cdot H_Z - G_Z H_Y)^2 + (G_X \cdot H_Z - G_Z \cdot H_X)^2 + (G_X \cdot H_Y - G_Y \cdot H_X)^2]^{0.5}$$

Inclination and highside toolface can be calculated using the accelerometer measurements, in accordance with the following formulas:

$$(10) \qquad tanI = (G_X{}^2 + G_Y{}^2)^{0.5} \div G_Z$$

$$(11) \qquad tanHS = (- G_x) + (-G_y)$$

Azimuth can be calculated using the accelerometer and magnetometer measurements, as follows:

$$(12) \qquad tanA = (G_X{}^2 + G_Y{}^2 + G_Z{}^2)^{0.5} \cdot (H_y \cdot G_x - H_x \cdot G_y) \div [H_z \cdot (G_X{}^2 + G_Y{}^2) -$$

$$G_z \cdot (H_x Gx + H_y G_Y)]$$

The magnetometer measurements can be corrupted by magnetic interferences. Axial magnetic interference is typically associated with the drillstring. It is oriented along the drillstring axis, and produces errors in the $H_Z$ measurement. This degrades the accuracy of the calculated azimuth.
The degradation of the azimuth measurement due to axial magnetic interference can be corrected by the following method, using a sensor package which provides accelerometer and magnetometer measurements.
The method utilizing the nominal (or "expected") values for the total magnetic field strength "$\underline{H}$" and dip angle

"$\underline{D}$", which are available in look-up tables for all latitudes and longitudes on the earth's surface or in contour maps. There is a certain amount of uncertainty associated with these nominal values, since they are both location and time dependent

The method of the present invention consists of several major steps:

(1) determining an estimated value $H_{Z1}$ to match calculated magnetic field strength H to nominal magnetic field strength $\underline{H}$;
(2) determining an estimated value $H_{Z2}$ to match calculated dip angle D to nominal dip angle $\underline{D}$;
(3) determining a best estimate $H_{ZE}$ from $H_{Z1}$ and $H_{Z2}$; and
(4) calculating azimuth A, which is free of axial magnetic field biasing errors, using $H_{ZE}$.

**Calculation of $H_{Z1}$**

The value of $H_{Z1}$ is calculated to give the best match to the nominal or "estimated" magnetic field strength $\underline{H}$. Using $\underline{H}$ and the cross-axial magnetometer measurements, the value of $H_{Z1}$ is determined from the relationship:

$$(13) \qquad H_{Z1} = (\underline{H}^2 - H_x^2 - H_y^2)^{0.5}$$

Actually, there are two solutions for equation number 13. They are equal in magnitude and opposite in sign. In most cases, it is fairly easy to determine which of the two solutions is correct: the correct solution should give good agreement between the calculated dip angle D and the nominal dip angle $\underline{D}$; it should also result in a calculated azimuth A which is consistent with the expected azimuth and the uncorrected azimuth measurement.

$H_{Z1}$ is an estimate of the axial magnetic field strength. The uncertainty associated with this estimate is a function of both the borehole orientation and the uncertainty associated with the value of $\underline{H}$. If the borehole is oriented along the direction of the earth's magnetic field (i.e., "drilling along the dip angle"), both $H_X$ and $H_Y$ are 0, and the uncertainty in $H_{Z1}$ is the same as the uncertainty in $\underline{H}$. The uncertainty in $H_{Z1}$ increases as the angle between the borehole and the earth's magnetic field increases. It reaches a maximum when the borehole is perpendicular to the earth's magnetic field.

It is desirable to quantify our confidence in the $H_{Z1}$ estimate. The following discussion outlines a method to achieve this. The total magnetic field strength is:

$$(14) \qquad H = (H_X^2 + H_Y^2 + H_{Z2})^{0.5}$$

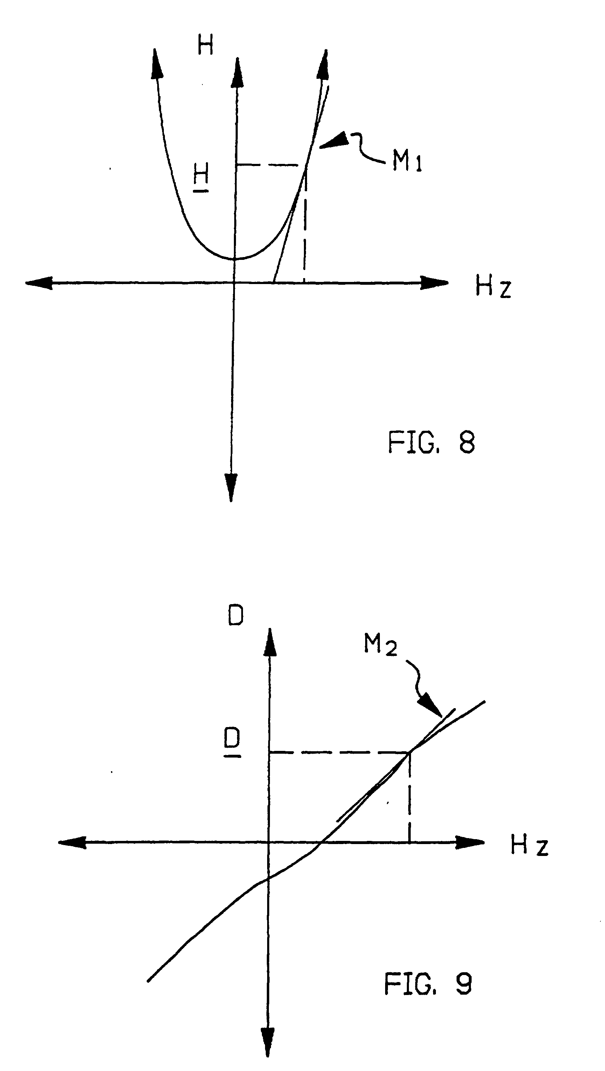

If H is plotted as a function of $H_Z$, while $H_X$ and $H_Y$ are held constant at the measured values, the result is a parabola, which is shown in Figure 8. The slope of this curve is the sensitivity of H to $H_Z$. If the slope is fairly steep, it means that an incremental change in $H_Z$ results in a relatively large change in H. Another way to look at this is that when the slope is fairly steep, any uncertainty in the H that we are using relates to a relatively smaller uncertainty in $H_{Z1}$. This means that the relative confidence in our $H_{Z1}$ estimate is proportional to the magnitude of the slope of the H versus $H_Z$ curve at the point H = $\underline{H}$.

**Calculation of $H_{Z2}$**

The value $H_{Z2}$ is calculated to give the best match to the nominal magnetic dip angle $\underline{D}$. Using $\underline{D}$, the accelerometer measurements, and the cross-axial magnetometer measurements ($H_X$ and $H_Y$), the value $H_{Z2}$ is determined from the relationship:

$$(15) \qquad \tan \underline{D} = G_X \cdot H_X + G_Y \cdot H_Y + G_Z \cdot H_{Z2} \div [(G_Y \cdot H_{Z2} - G_Z \cdot H_Y)^2 + (G_X \cdot H_{Z2}$$

$$- G_Z \cdot H_X)^2 + (G_X \cdot H_Y - G_Y \cdot H_X)^2]^{0.5}$$

The above equation can be solved numerically using an iterative procedure to find the value for $H_{Z2}$. As with the calculation of $H_{Z1}$, this equation may have more than one solution within the range of reasonable values for $H_{Z2}$ (i.e., $-1.1 \cdot \underline{H} < H_{Z2} < 1.1 \cdot \underline{H}$).

It is desirable to quantify our confidence in the $H_{Z2}$ estimate. Following the same reasoning applied earlier, the relative confidence in our $H_{Z2}$ estimate is proportional to the magnitude of the slope of the D versus $H_Z$ curve at

the point D = $\underline{D}$, which is shown in Figure 9.

**Calculation of $H_{ZE}$**

The estimated axial magnetic field is calculated as:

$$(16) \qquad H_{ZE} = (C_1 \cdot H_{Z1} + C_2 \cdot H_{Z2}) \div (C_1 + C_2)$$

$C_1$ and $C_2$ are weighing factors which are inversely proportional to the uncertainty in $H_{Z1}$ and $H_{Z2}$ respectively. Dividing by the sum of $C_1$ and $C_2$ insures proper normalization of the resulting $H_{ZE}$. $C_1$ is proportional to the slope of the H versus $H_Z$ curve evaluated at H = $\underline{H}$. $C_2$ is proportional to the slope of the D versus $H_Z$ curve evaluated at D = $\underline{D}$.
In one embodiment of the present invention, the weighing factors $C_1$ and $C_2$ are set to the exact values of the slope $M_1$ as determined from **Figure 8** and slope $M_2$ as determined from **Figure 9,** respectively, as follows:

$$(17) \qquad C_1 = M_1$$

$$(18) \qquad C_2 = M_2$$

In an alternative embodiment the weighing factors $C_1$ and $C_2$ are derived in a manner which is in part dependent upon the margin of error associated with the source of the value utilized for the nominal magnetic field strength $\underline{H}$ and the value utilized for the nominal dip angle $\underline{D}$. For example, if a chart is utilized to derive the nominal value of the magnetic field strength $\underline{H}$ for a particular latitude and longitude on the earth's surface, the chart's margin of error (for example, plus or minus three milligauss) is identified and utilized in deriving the weighing factor $C_1$ in accordance with the following formula, where $M_1$ is the slope derived from the graph of **Figure 8,** and $\sigma_{\underline{H}}$ is utilized to represent the margin of error associated with the source of information from which the nominal magnetic field $\underline{H}$ is derived:

$$(19) \qquad C_1 = (M_1 + \sigma_{\underline{H}})^2$$

The source of the nominal magnetic field strength $\underline{H}$ may be charts, computer programs, and measurements derived utilizing surface sensors such as a proton magnetometer sensor. These sources of nominal values for the magnetic field strength $\underline{H}$ each have their own associated margin of error, with a nominal value derived from a surface measurement utilizing a proton magnetometer providing a very low margin of error, and less precise sources such as charts having a fairly high margin of error. A source of information which has a very low margin of error should be accorded greater weight in calculating $H_{ZE}$ than that accorded to a source of the nominal value of $\underline{H}$ which has a greater margin of error.
The same is true for the nominal dip angle $\underline{D}$. A source for the nominal value which has a larger margin of error should be accorded less weight than a source for the nominal value of the dip angle $\underline{D}$ which has a lesser margin of error. Accordingly, the weighing factor $C_2$ is determined in accordance with the following formula, wherein $M_2$ is representative of the slope derived from the graph of **Figure 9,** and $\sigma_{\underline{H}}$ is representative of the margin of error associated with the source of the nominal value for the dip angle $\underline{D}$:

$$(19) \qquad C_2 = (M_2 \div \sigma_{\underline{H}})^2$$

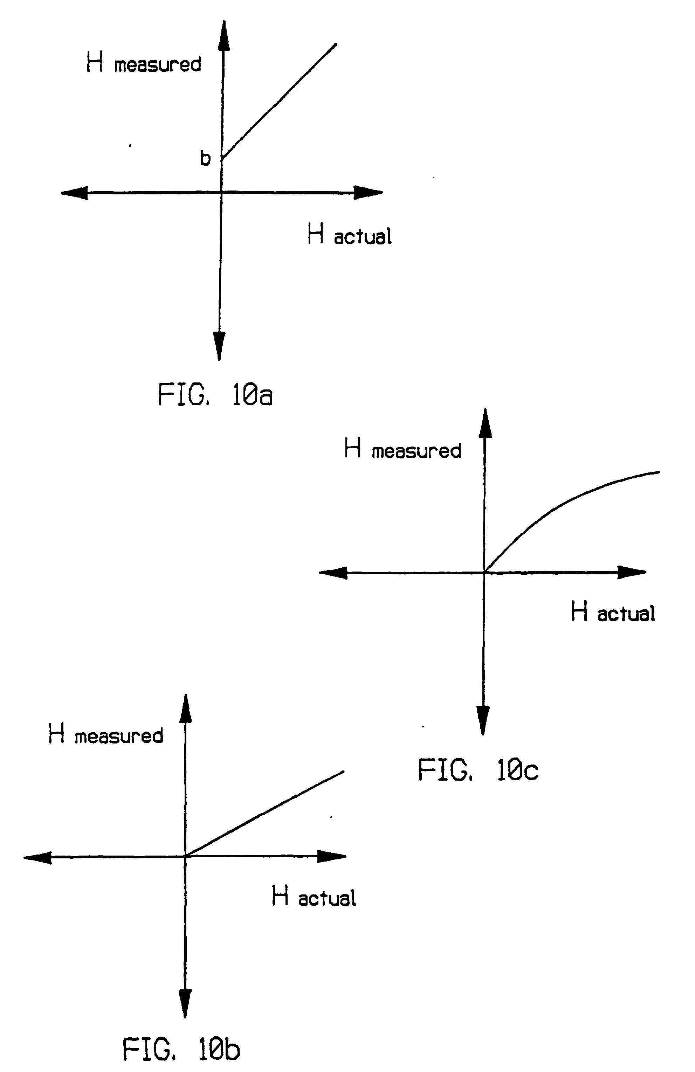

The present invention is extremely advantageous since it eliminates the influence of all types of multiple error sources, including "sensor errors" and "axial magnetic interference". Sensor errors are errors which are associated with the operation of the magnetometers disposed within the sensor array, and include bias errors which are defined as some positive or negative bias present in the axial magnetic field sensors which render all measurements of the axial magnetic field made by the magnetic sensor inaccurate by a constant amount. More precisely, this "bias error" represents the "b" component (in the function Y = MX + b) in the graph of **Figure 10a** which depicts the actual magnetic field versus the measured magnetic field. Another type of sensor error is a "scale factor" error which is depicted in **Figure 10b**. A still different type of sensor error is a "nonlinearity" in the relationship between the actual magnetic field and the measured magnetic field, which is depicted in **Figure 10c**.
The "axial magnetic interference" type of bias error represents the corrupting influence of a spurious magnetic field source upon the measured magnetic field, which can originate from drillstring magnetization, as discussed above, or magnetic anomalies presented by magnetic components disposed axially in the wellbore, such as those found in wellbore tubulars such as casing in the hole being drilled.

The present invention eliminates the undesirable and corrupting influence of "sensor" errors, including bias errors, scaling factor errors, and nonlinearity of the magnetometer sensors as well as axial magnetic interference, such as that developed due to drillstring magnetization, by utilizing the best possible estimate of the axial component of the magnetic field in lieu of the actual measurement of the axial component of the magnetic field, thus greatly enhancing the accuracy of survey operations.

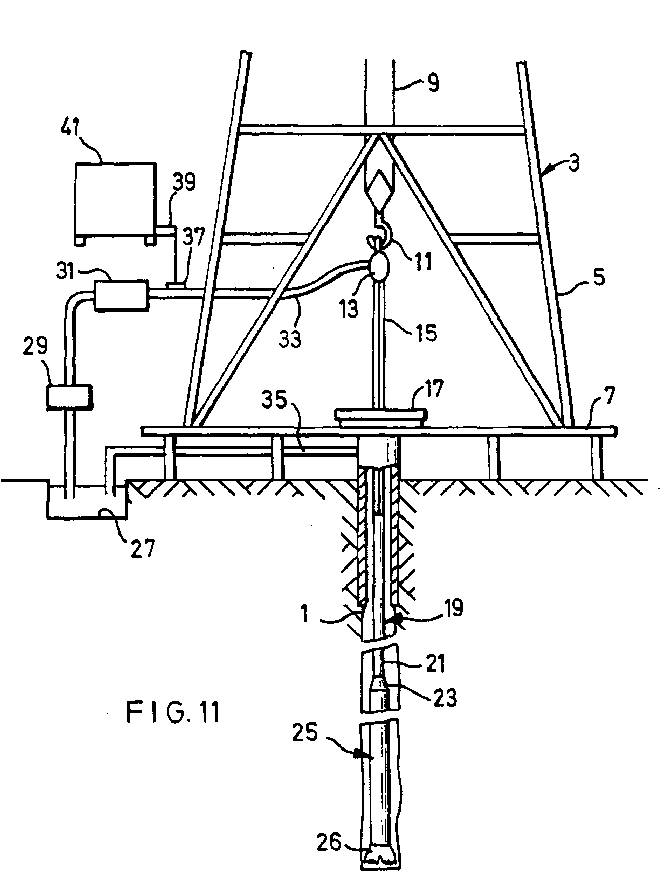

**Figure 11** depicts one example of surveying operations conducted during drilling operations in accordance with the present invention. As is shown, a conventional rig **3** includes a derrick **5,** derrick floor **7,** draw works **9,** hook **11,** swivel **13,** kelly joint **15,** and rotary table **17.** A drilistring **19** which Includes drill pipe section **21** and drill collar section **23** extends downward from rig **3** Into wellbore **1.** Drill collar section **23** preferably includes a number of tubular orill collar members which connect together, including a measurement-while-drilling logging subassembly and cooperating mud pulse telemetry data transmission subassembly, which are collectively referred to hereinafter as "measurement and communication system **25**".

During drilling operations, drilling fluid is circulated from mud pit **27** through mud pump **29,** through a desurger **31,** and through mud supply line **33** into swivel **13.** The drilling mud flows through the kelly joint and an axial central bore in the driffstring. Eventually, it exists through jets which are located in rock bit **26** which is connected to the lowermost portion of measurement and communication system **25.** The drilling mud flows back up through the annular space between the outer surface of the drillstring and the inner surface of wellbore **1,** to be circulated to the surface where it is returned to mud pit **27** through mud return line **35.** A shaker screen (which is not shown) separates formation cuttings from the drilling mud before It returns to mud pit **27.**

Preferably, measurement and communication system **25** utilizes a mud pulse telemetry technique to communicate data from a downhole location to the surface while drilling operations take place. To receive data at the surface, transducer **37** is provided In communication with mud supply line **33.** This transducer generates electrical signals In response to drilling mud pressure variations. These electrical signals are transmitted by a surface conductor **39** to a surface electronic processing system **41,** which is preferably a data processing system with a central processing unit for executing program instructions, and for responding to user commands entered through either a keyboard or a graphical pointing device.

The mud pulse telemetry system is provided for communicating data to the surface concerning numerous downhole conditions sensed by well logging transducers or measurement systems such as the surveying sensors that are ordinarily located within measurement and communication system **25.** Mud pulses that define the data propagated to the surface are produced by equipment which is located within measurement and communication system **25.** Such equipment typically comprises a pressure pulse generator operating under control of electronics contained in an instrument housing to allow drilling mud to vent through an orifice extending through the drill collar wall. Each time the pressure pulse generator causes such venting, a negative pressure pulse is transmitted to be received by surface transducer **37.** Such a telemetry system is described and explained In U.S. Patent No. 4,216,536 to More, which is incorporated herein by reference as if fully set forth. An alternative conventional arrangement generates and transmits positive pressure pulses. As is conventional, the circulating mud provides a source of energy for a turbine-driven generator subassembly which Is located within measurement and communication system **25.** The turbine-driven generator generates electrical power for the pressure pulse generator and for various circuits including those circuits which form the operational components of the measurement-while-drilling tools. As an alternative or supplemental source of electrical power, batteries may be provided, particularly as a back-up for the turbine-driven generator.

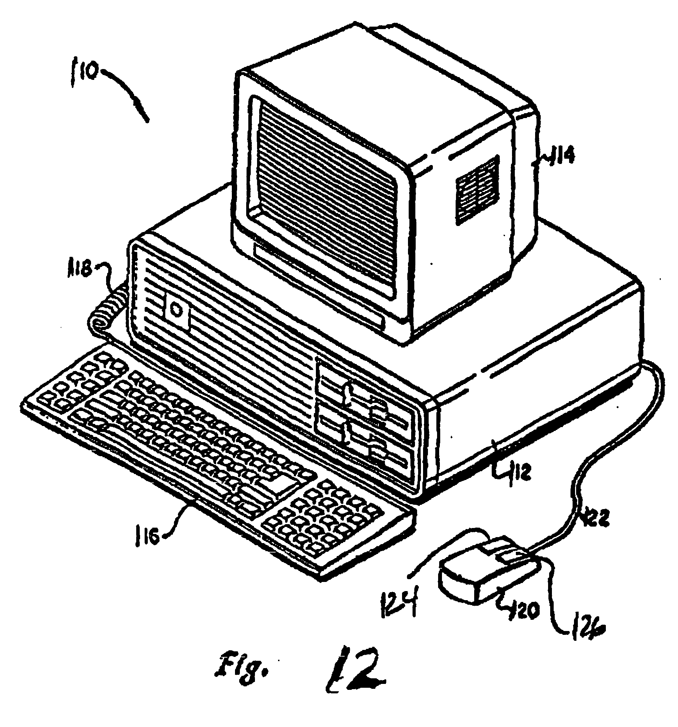

With reference now to the figures and in particular with reference to **Figure 12**, there is depicted a pictorial representation of data processing system **110** which may be programmed in accordance with the present invention. As may be seen, data processing system **110** includes processor **112** which preferably includes a graphics processor, memory device and central processor (not shown). Coupled to processor **112** is video display **114** which may be implemented utilizing either a color or monochromatic monitor, in a manner well known in the art. Also coupled to processor **112** is keyboard **116**. Keyboard **116** preferably comprises a standard computer keyboard which is coupled to the processor by means of cable **118**.

Also coupled to processor **112** Is a graphical pointing device, such as mouse **120**. Mouse **120** is coupled to processor **112,** in a manner well known In the art, via cable **122.** As is shown, mouse **120** may include left button **124,** and right button **126,** each of which may be depressed, or "clicked", to provide command end control signals to data processing system **110.** While the disclosed embodiment of the present invention utilizes a mouse, those skilled in the art will appreciate that any graphical pointing device such as a light pen or touch sensitive screen may be utilized to implement the method and apparatus of the present Invention. Upon reference to the foregoing, those skilled in the art will appreciate that data processing system **110** may be implemented utilizing a so-called personal computer, such as the Model 80 PS/2 computer manufactured by International Business Machines Corporation of Armonk, New York, or any other conventional and commercially avaliable data processing system.

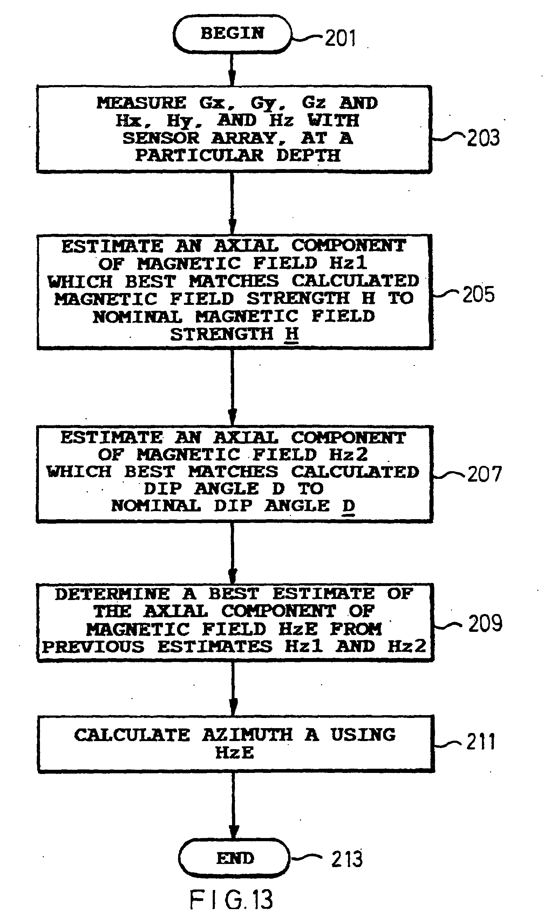

**Figure 13** is a high-level flowchart representation of the operations performed by data processing system **110** in accordance with the present invention to provide improved wellbore surveys. The process begins at step **201,** and continues at step **203,** wherein the subsurface surveying equipment is utilized to measure the x-axis, y-axis, and z-axis components of the gravitational and magnetic fields at a particular depth within the wellbore. This data is telemetered to the surface utilizing the conventional mud pulse telemetry technology, or any other data transmission technology. At the wellbore surface, the measurements are input either manually or automatically into data processing system **110**. Next, In accordance with step **205,** the data processing system **110** is utilized to estimate an axial component of the magnetic field $H_{Z1}$ which best matches the calculated magnetic field strength H to the nominal magnetic field strength $\underline{H}$ for that particular geographic location. More particularly, data processing system **110** is programmed to utilize equation number **13** to calculate a value for $H_{Z1}$. Preferably, data processing system **110** also automatically quantifies the "confidence" in the value estimated by $H_{Z1}$. Next, in accordance with step **207,** data processing system **110** is utilized to estimate an axial component of magnetic field $H_{Z2}$ which best matches the calculated dip angle D with the nominal dip angle $\underline{D}$ for the particular geographic location. More particularly, the gravitational and magnetic field survey measurements are automatically utilized by data processing system **110** to solve equation number **15** utilizing an iterative process. Additionally, and preferably, a confidence indicator of this estimate is also calculated. Next, In accordance with step **209,** data processing system **110** is utilized to automatically determine a best estimate of the axial component of the magnetic field $H_{ZE}$ from the previous estimates $H_{Z1}$ and $H_{Z2}$, In accordance with equation number **16.** Finally, In accordance with step **211,** data processing system **110** is utilized to automatically calculate azimuth A utilizing $H_{ZE}$. The process then ends at step **213** wherein the azimuth data is provided to other conventional data processing routines which record and plot the wellbore data.

## Claims

1. A method of surveying a wellbore, at a particular geographic location, utilizing a sensor array located within a drillstring within said wellbore, comprising:

   measuring magnetic and gravitational fields with said sensor array at a particular depth;

   from measurements taken with said sensor array at said particular depth, determining an estimated value of an axial component of magnetic field $H_{z1}$ to match calculated magnetic field strength H to nominal magnetic field strength $\underline{H}$ at said particular geographic location;

   from measurements taken with said sensor array at said particular depth, determining an estimated value of an axial component of magnetic field $H_{z2}$ to match calculated dip angle D to nominal dip angle $\underline{D}$ at said particular geographic location;

   determining a best estimate of said axial component $H_{zE}$ of said magnetic field at said particular geographic location from $H_{z1}$ and $H_{z2}$ and

   calculating directly, algebraically, and non-iteratively the wellbore azimuth using $H_{ZE}$ which is free of axial magnetic field errors.

2. A method of surveying a wellbore according to Claim 1, wherein said step of determining a best estimate includes:

   numerically quantifying numerical confidence indicators for estimated values $H_{z1}$ and $H_{z2}$

3. A method of surveying a wellbore according to Claim 2, wherein, said step of determining a best estimate comprises:

   determining a best estimate of an axial component of said magnetic field from $H_{z1}$ and $H_{z2}$ utilizing said numerical confidence indicators.

4. A method of surveying a wellbore according to Claim 3, wherein said confidence indicators are utilized to generate a weighted value which represents said best estimate of said axial component $H_{zE}$ of said magnetic field.

5. A method of surveying a wellbore according to Claim 1, further comprising:

generating a numerical indicator of confidence of accuracy for each of a plurality of estimates of said axial component of said magnetic field.

**6.** A method of surveying a wellbore according to Claim 5, wherein said numerical indicator of confidence of accuracy is based upon measurements with said sensor array at a plurality of depths.

**7.** A method of surveying a wellbore according to Claim 2, wherein

said expected value of magnetic field strength is utilized to develop a first estimate of an axial component of said magnetic field, and said expected value of dip angle is utilized to develop a second estimate of an axial component of said magnetic field;

a first numerical indicator of confidence of accuracy is developed from said first estimate of an axial component of said magnetic field; and

a second numerical indicator of confidence of accuracy is developed for said second estimate of an axial component of said magnetic field.

**8.** A method of surveying a wellbore according to Claim 2, wherein during said step of determining:

the best estimate of the axial component $H_{ZE}$ of the magnetic field is a composite estimate of said axial component of said magnetic field which is calculated in a manner which weights said first and second estimates $H_{Z1}$, $H_{Z2}$ in proportion to said first and second numerical confidence indicators of accuracy.

**Patentansprüche**

**1.** Verfahren zum Vermessen eines Bohrlochs an einer bestimmten geographischen Stelle unter Verwendung eines Sensorarrays, das in einem Bohrstrang in dem Bohrloch angeordnet ist, umfassend:

Messen magnetischer und Gravitationsfelder in dem Sensorarray in einer bestimmten Tiefe;
Bestimmen eines Schätzwerts einer axialen Komponente des Magnetfelds $H_{z1}$ aus mit dem Sensorarray in der bestimmten Tiefe vorgenommenen Messungen, um die berechnete Magnetfeldstärke H mit einer nominellen Magnetfeldstärke $\underline{H}$ an der bestimmten geographischen Stelle in Beziehung zu setzen;
Bestimmen eines Schätzwerts einer axialen Komponente des Magnetfelds $H_{z2}$ aus mit dem Sensorarray in der bestimmten Tiefe vorgenommenen Messungen, um den berechneten Neigungswinkel D mit einem nominellen Neigungswinkel $\underline{D}$ an der bestimmten geographischen Stelle in Beziehung zu setzen;
Bestimmen eines besten Schätzwerts der axialen Komponente des Magnetfelds $H_{zE}$ an der bestimmten geographischen Stelle aus $H_{z1}$ und $H_{z2}$; und
direktes algebraisches und nicht-iteratives Berechnen des Azimuth des Bohrlochs unter Verwendung von $H_{zS}$, der frei von axialen Magnetfeldfehlern ist.

**2.** Verfahren zum Vermessen eines Bohrlochs nach Anspruch 1, wobei der Schritt des Bestimmens eines besten Schätzwerts folgendes beinhaltet:

zahlenmäßiges Quantifizieren numerischer Konfidenzindikatoren für die Schätzwerte $H_{z1}$ und $H_{z2}$.

**3.** Verfahren zum Vermessen eines Bohrlochs nach Anspruch 2, wobei der Schritt des Bestimmens eines besten Schätzwerts folgendes umfaßt:

Bestimmen eines besten Schätzwerts einer axialen Komponente des Magnetfelds aus $H_{z1}$ und $H_{z2}$ unter Verwendung der numerischen Konfidenzindikatoren.

**4.** Verfahren zum Vermessen eines Bohrlochs nach Anspruch 3, wobei mit den Konfidenzindikatoren ein gewichteter Wert erzeugt wird, der den besten Schätzwert der axialen Komponente $H_{zE}$ des Magnetfelds darstellt.

**5.** Verfahren zum Vermessen eines Bohrlochs nach Anspruch 1, weiterhin mit folgendem:

Erzeugen eines numerischen Konfidenzindikators der Präzision für jeden von mehreren Schätzwerten der axialen Komponente des Magnetfelds.

**6.** Verfahren zum Vermessen eines Bohrlochs nach Anspruch 5, wobei der numerische Konfidenzindikator der Präzision auf Messungen mit dem Sensorarray in mehreren Tiefen basiert.

**7.** Verfahren zum Vermessen eines Bohrlochs nach Anspruch 2, wobei

mit dem erwarteten Wert der Magnetfeldstärke ein erster Schätzwert einer axialen Komponente des Magnetfelds entwickelt wird und mit dem erwarteten Wert des Neigungswinkels ein zweiter Schätzwert einer axialen Komponente des Magnetfelds entwickelt wird;

aus dem ersten Schätzwert einer axialen Komponente das Magnetfelds ein erster numerischer Konfidenzindikator der Präzision entwickelt wird; und

für den zweiten Schätzwert einer axialen Komponente das Magnetfelds ein zweiter numerischer Konfidenzindikator der Präzision entwickelt wird.

**8.** Verfahren zum Vermessen eines Bohrlochs nach Anspruch 2, wobei während des Schritts des Bestimmens:

der beste Schätzwert der axialen Komponente $H_{ZE}$ des Magnetfelds ein zusammengesetzter Schätzwert der axialen Komponente des Magnetfelds ist, der so berechnet wird, daß. der erste und zweite Schätzwert $H_{z1}$, $H_{z2}$ proportional zu dem ersten und zweiten numerischen Konfidenzindikator der Präzision gewichtet werden.

## Revendications

**1.** Procédé d'inspection d'un puits de forage, à un emplacement géographique particulier, à l'aide d'une matrice de capteurs située à l'intérieur d'un train de forage dans ledit puits de forage, comprenant :

la mesure de champs magnétique et de pesanteur, à l'aide de ladite matrice de capteurs, à une profondeur particulière ;

à partir de mesures effectuées à l'aide de. ladite matrice de capteurs à ladite profondeur particulière, la détermination d'une valeur estimée d'une composante axiale du champ magnétique $H_{z1}$ en vue de faire correspondre l'intensité calculée du champ magnétique, H, à l'intensité nominale du champ magnétique, H̲, audit emplacement géographique particulier ;

à partir de mesures effectuées à l'aide de ladite matrice de capteurs à ladite profondeur particulière, la détermination d'une valeur estimée d'une composante axiale du champ magnétique $H_{z2}$ en vue de faire correspondre l'angle de pendage calculé, D, à l'angle de pendage nominal, D̲, audit emplacement géographique particulier ;

la détermination d'une meilleure estimation de ladite composante axiale $H_{zE}$ dudit champ magnétique audit emplacement géographique particulier à partir de $H_{z1}$ et de $H_{z2}$ ; et

le calcul direct, algébrique et non itératif de l'azimut du puits de forage à l'aide de $H_{zE}$, laquelle est exempte d'erreurs sur le champ magnétique axial.

**2.** Procédé d'inspection d'un puits de forage selon 1a revendication 1, dans lequel ladite étape de détermination d'une meilleure estimation comporte :

la quantification numérique d'indicateurs numériques de confiance pour les valeurs estimées $H_{z1}$ et $H_{z2}$.

**3.** Procédé d'inspection d'un puits de forage selon la revendication 2, dans lequel ladite étape de détermination d'une meilleure estimation comporte :

la détermination d'une meilleure estimation d'une composante axiale dudit champ magnétique à partir de $H_{z1}$ et de $H_{z2}$ à l'aide desdits indicateurs numériques de confiance.

**4.** Procédé d'inspection d'un puits de forage selon la revendication 3, dans lequel lesdits indicateurs de confiance sont utilisés pour générer une valeur pondérée représentant ladite meilleure estimation de ladite composante axiale $H_{zE}$ dudit champ magnétique.

**5.** Procédé d'inspection d'un puits de forage selon la revendication 1, comprenant en outre :

la génération d'un indicateur numérique de confiance de précision pour chacune d'une pluralité d'estimations de ladite composante axiale dudit champ magnétique.

**6.** Procédé d'inspection d'un puits de forage selon la revendication 5, dans lequel ledit indicateur numérique de confiance de précision est basé sur des mesures à l'aide de ladite matrice de capteurs à une pluralité de profondeurs.

**7.** Procédé d'inspection d'un puits de forage selon la revendication 5, dans lequel :

ladite valeur attendue de l'intensité du champ magnétique est utilisée pour former une première estimation d'une composante axiale dudit champ magnétique, et ladite valeur attendue de l'angle de pendage est utilisée pour former une deuxième estimation d'une composante axiale dudit champ magnétique ;
un premier indicateur numérique de confiance de précision est formé à partir de ladite première estimation d'une composante axiale dudit champ magnétique ; et
un deuxième indicateur numérique de confiance de précision est formé à partir de ladite deuxième estimation d'une composante axiale dudit champ magnétique.

**8.** Procédé d'inspection d'un puits de forage selon la revendication 2, dans lequel, durant ladite étape de détermination :

la meilleure estimation de la composante axiale $H_{zE}$ du champ magnétique est une estimation composite de ladite composante axiale dudit champ magnétique qui est calculé d'une manière qui pondère lesdites première et deuxième estimations $H_{z1}$, $H_{z2}$ proportionnellement auxdits premier et deuxième indicateurs numériques de confiance de précision.

VERTICAL

NORTH                                HORIZONTA

D

H

G                          FIG. 1

HS

X

T

Y

I

G

FIG. 2                          Z

FIG. 3

FIG. 4

FIG. 5

E

Z NE

N

A

I

V
(GRAVITY FIELD VECTOR G)

Z
(LONGITUDINAL AXIS
OF DRILLSTRING)

FIG. 6

VERTICAL

NORTH

A

I

EAST

T

Y

Z

FIG. 7a

FIG. 7b

FIG. 8

FIG. 9

H measured

b

H actual

FIG. 10a

H measured

H actual

FIG. 10c

H measured

H actual

FIG. 10b

FIG. 11

Fig. 12

BEGIN ～201

MEASURE Gx, Gy, Gz AND
Hx, Hy, AND Hz WITH
SENSOR ARRAY, AT A
PARTICULAR DEPTH ～203

ESTIMATE AN AXIAL COMPONENT
OF MAGNETIC FIELD Hz1
WHICH BEST MATCHES CALCULATED
MAGNETIC FIELD STRENGTH H TO
NOMINAL MAGNETIC FIELD
STRENGTH H ～205

ESTIMATE AN AXIAL COMPONENT
OF MAGNETIC FIELD Hz2
WHICH BEST MATCHES CALCULATED
DIP ANGLE D TO
NOMINAL DIP ANGLE D ～207

DETERMINE A BEST ESTIMATE OF
THE AXIAL COMPONENT OF
MAGNETIC FIELD HzE FROM
PREVIOUS ESTIMATES Hz1 AND Hz2 ～209

CALCULATE AZIMUTH A USING
HzE ～211

END ～213

FIG.13